# EUROPEAN PATENT APPLICATION

(11) **EP 1 821 516 A1**
(43) Date of publication of application: **22.08.2007**
(21) Application number: 07100249.7
(22) Date of filing: 08.01.2007
(51) Int. Cl.: H04N 1/32, H04L 9/32, H04L 29/06

(54) **Communication device with time authentication requesting function**

(30) Priority: 16.02.2006 JP 2006038812
(71) Applicant: MURATA KIKAI KABUSHIKI KAISHA, Kyoto (JP)
(72) Inventor: Yoshikawa, Hiroyasu Murata Kikai Kabushiki Kaisha, Kyoto 612-8686 (JP)
(74) Representative: W.P. Thompson & Co.

(57) **Abstract**

A communication device with a time authentication requesting function uses timestamp technology to verify a device operation. When receiving an instruction for e-document scan, the communication device transmits a hash value of scanned data of an original to a TSA, and receives a timestamp from the TSA. Then, the communication device stores the scanned data assigned with the timestamp in a prescribed folder, and stores e-document scan history. When receiving an instruction for fax communication, after carrying out fax transmission, the communication device storesfax communication history. When stored history data reaches a prescribed amount, a timer time at that point of time is added to the history data, and the history data is encoded. The communication device transmits a hash value to the TSA, and receives a timestamp from the TSA. Then, the communication device stores the history data assigned with the timestamp in a prescribed folder.

## Description

### BACKGROUND OF THE INVENTION

### 1. Field of the Invention

The present invention relates to a communication device with a time authentication requesting function. The device may be a digital Multi Function Peripheral (MFP), which assigns a timestamp to a digital document and stores the digital document assigned with the timestamp.

### 2. Description of the Related Art

Recently, a digital MFP including a copier function, a facsimile function, a printer function, and a scanner function or the like assigns a timestamp to a document image scanned by a scanner, and stores the document image as an e-document. That is, since digital data can be easily altered compared with a paper document, timestamp technology has been used. The timestamp is technology for certifying the time when an electronic document was fixed. The timestamp certifies from when the document has existed, and that the document has not been altered by third parties and also the creator himself from the time when the document was created.

When adopting such timestamp technology, first, a communication device transmits a hash value of an electronic document to a Time Stamping Authority (TSA). The TSA encodes the hash value and information of accurate time clocked by an atomic clock, and returns to the communication device as a timestamp. The communication device stores the received timestamp along with the electronic document.

A communication device such as a digital MFP stores a communication management record to verify an operation of a communication device. However, this verification can be carried out properly only when a clock of the communication device is operating normally. When clock data of the communication device is inaccurate, history data of the communication device also becomes inaccurate.

### SUMMARY OF THE INVENTION

In order to overcome the problems described above, preferred embodiments of the present invention provide a communication device with a time authentication requesting function which can verify an operation of a communication device by using the timestamp technology.

According to an aspect of the present invention, a communication device with a time authentication requesting function includes a communication unit, a time authenticated document storage unit which stores a time authenticated document, and a control unit which assigns a timestamp to a document and stores the document assigned with the timestamp in the time authenticated document storage unit. The communication device also includes a history information storage unit which stores history information. The control unit assigns a timestamp to history information data stored in the history information storage unit, and stores the history information data assigned with the timestamp in the time authenticated document storage unit.

According to a preferred aspect of the present invention, the history information includes a time authenticated document generation history and/or a communication history. When assigning a timestamp to the history information data, the control unit adds clock data of a communication device to the history information data.

According to the above-described communication device with the time authentication requesting function, for example, for each prescribed period of time, or when a prescribed amount of history information is stored, a timestamp is assigned to the history information data of the time authenticated document generation history and the communication history, and the history information data assigned with the timestamp is stored in the time authenticated document storage unit. Therefore, it is possible to verify the fixed time of the history information and to verify that the history information has not been altered. Moreover, when assigning a timestamp to the history information data, the clock data of the communication device may be added to the history information data, and the timestamp is assigned to the history information data. Therefore, even if the clock data of the communication device was inaccurate, it is possible to accurately know the time included in the history information based on the time of the timestamp and the clock data of the communication device when the timestamp was assigned. As a result, it is possible to verify the operation of the communication device based on accurate time.

Other features, elements, processes, steps, characteristics and advantages of the present invention will become more apparent from the following detailed description of preferred embodiments of the present invention with reference to the attached drawings.

### BRIEF DESCRIPTION OF THE DRAWINGS

Fig. 1 shows an example of a network configuration of a system including a digital MFP.

Fig. 2 is a block diagram showing the hardware configuration of the digital MFP.

Fig. 3 shows an example of a detailed structure of a display and operation unit.

Fig. 4 shows a file structure of an e-document storage unit.

Fig. 5 shows an example of data stored in a management file.

Fig. 6 shows an example of a scan execution screen.

Fig. 7 shows an example of an e-document scan execution screen.

Fig. 8 is a flowchart showing operations carried out when a start button is pressed.

Fig. 9 shows an example of data stored as history information.

Fig. 10 shows an example of history information data provided in a form of an e-document.

### DETAILED DESCRIPTION OF PREFERRED EMBODIMENTS

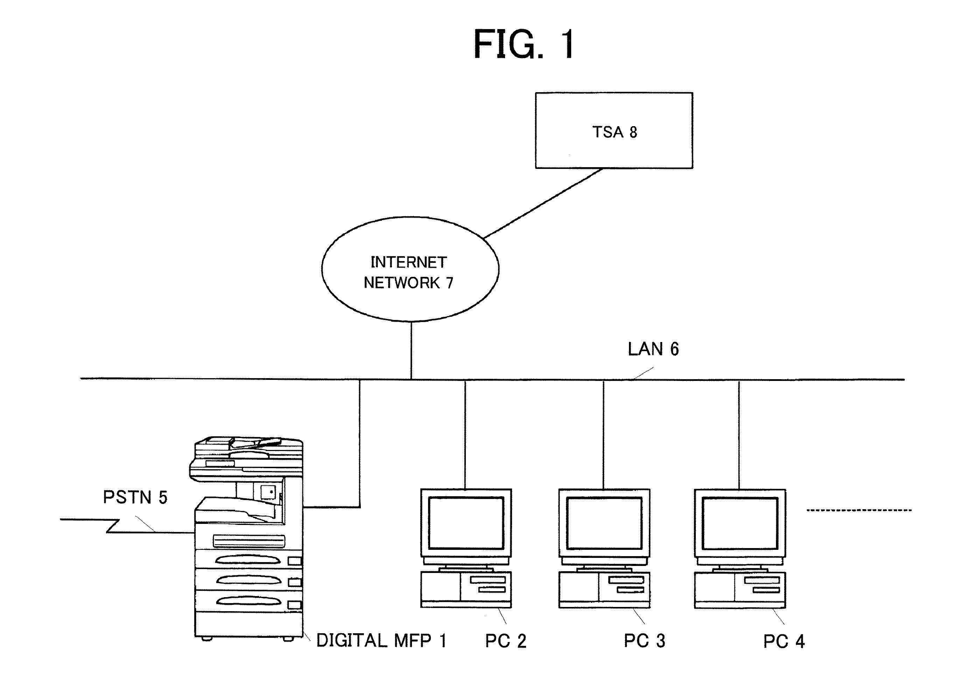

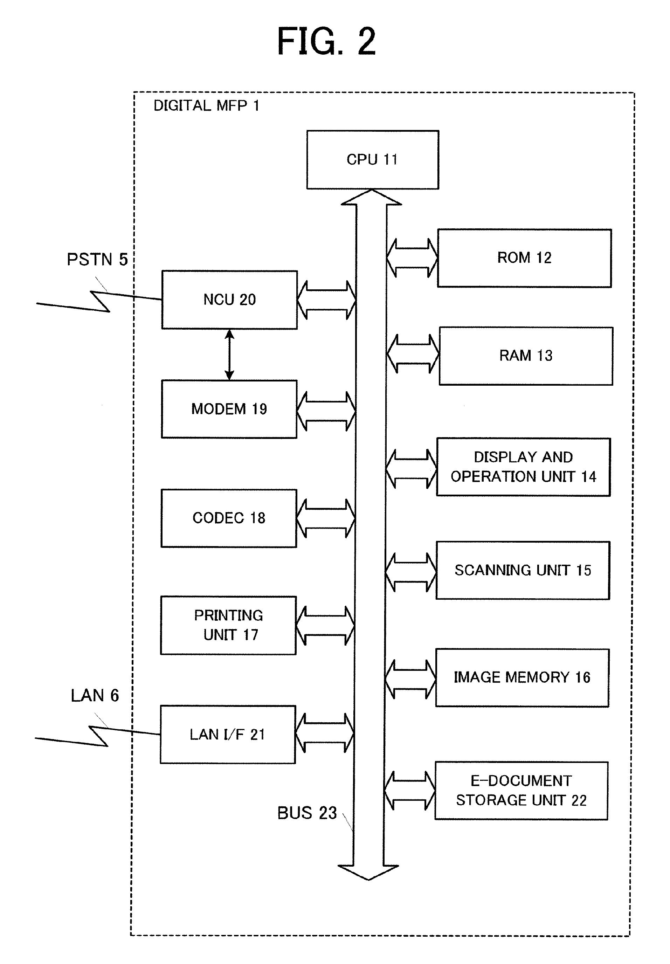

A description will be made of an example of a digital MFP as a communication device with a time authentication requesting function according to a preferred embodiment of the present invention. Fig. 1 shows an example of a network configuration of a system including a digital MFP. Fig. 2 is a block diagram showing the hardware configuration of the digital MFP.

In Fig. 1, reference numeral 1 denotes a digital MFP, reference numerals 2, 3, 4, etc. respectively denote a Personal Computer (PC), reference numeral 5 denotes a Public Switched Telephone Network (PSTN), 6 denotes a Local Area Network (LAN), 7 denotes an Internet network, and 8 denotes a TSA. The digital MFP 1 includes functions of a copy mode, a printer mode, and a facsimile mode, and also includes a mail transmitting function. The digital MFP 1 is connected to the PSTN 5 and the LAN 6. A plurality of PCs 2, 3, 4, etc. as terminal devices are connected to the LAN 6. The LAN 6 is also connected to the Internet network 7. The digital MFP 1 can transmit and receive mail via the Internet network 7. The TSA 8 is a time stamping authority. When the TSA 8 receives a hash value of scanned data from the digital MFP 1 via the Internet network 7, the TSA 8 encodes the received hash value along with information of accurate time clocked by an atomic clock. Then, the TSA 8 returns the encoded hash value as a timestamp.

As shown in Fig. 2, the digital MFP1 includes a Central Processing Unit (CPU) 11, a Read Only Memory (ROM) 12, a Random Access Memory (RAM) 13, a display and operation unit 14, a scanning unit 15, an image memory 16, a printing unit 17, a Coder-Decoder (CODEC) 18, a Modulator-Demodulator (MODEM) 19, a Network Control Unit (NCU) 20, a LAN interface (I/F) 21, and an e-document storage unit 22. Each of the units 11 to 22 is connected via a bus 23.

The CPU 11 controls each of the hardware components of the digital MFP 1 via the bus 23. The CPU 11 executes various programs stored in the ROM 12. The ROM 12 previously stores various programs and operation messages or the like necessary for an operation of the digital MFP 1. The RAM 13 is formed of a Static RAM (SRAM) or the like. The RAM 13 stores temporary data that is generated when a program is executed, and also stores communication history data and e-document generation history.

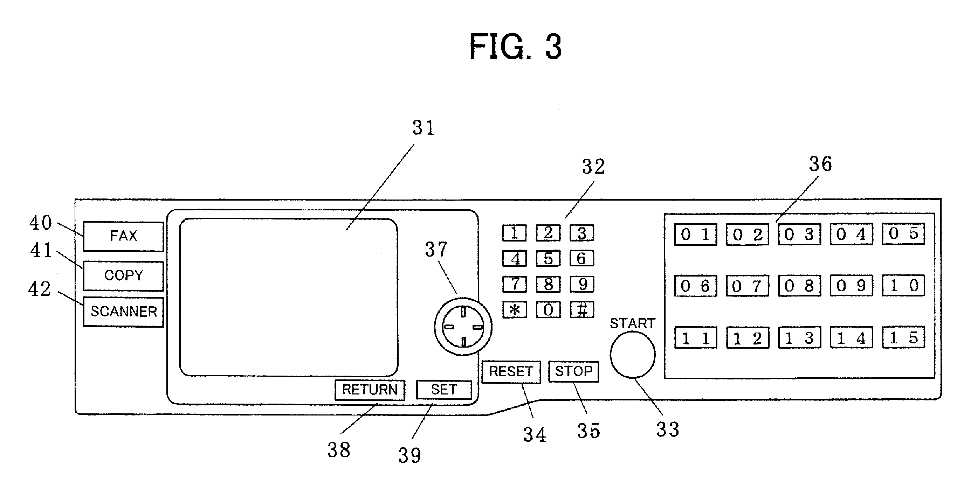

The display and operation unit 14 includes a display unit, which displays an operation status of the digital MFP 1 and displays an operation screen for various functions, and a plurality of keys for operating the digital MFP 1. As shown in Fig. 3, the display and operation unit 14 includes a Liquid Crystal Display (LCD) display unit 31 as the display unit and a plurality of operation keys. Touch-screen switches are provided in the LCD display unit 31. By pressing an item displayed on the LCD display unit 31, it becomes possible to select a corresponding item or to execute a function. As the operation keys, the display and operation unit 14 includes a ten-key numeric pad 32, a start key 33, a reset key 34, a stop key 35, a plurality of one-touch dial keys 36, a cross key 37, a return key 38, a set key 39, a FAX switching key 40, a copy switching key 41, and a scanner switching key 42 or the like. Further, the LCD display unit 31 may substitute a portion or all of these operation keys.

The scanning unit 15 includes an original placing table for an Auto Document Feeder (ADF) and/or a Flat Bed Scanner (FBS) or the like. The scanning unit 15 scans an original by a scanner using a Charge-Coupled Device (CCD) or the like, and outputs dot image data. The image memory 16 includes a Dynamic RAM (DRAM) or the like. The image memory 16 stores transmission image data, received image data, or image data scanned by the scanning unit 15. The printing unit 17 includes an electrophotographic printer device. The printing unit 17 prints out received data, copied original data, or print data transmitted from the remote PCs 2, 3, 4, etc.

The CODEC 18 encodes and decodes according to a prescribed protocol. For transmitting image data scanned from an original, the CODEC 18 encodes the image data by the Modified Huffman (MH), the Modified Read (MR) or the Modified MR (MMR) scheme. The CODEC 18 decodes image data received from a remote terminal. The CODEC 18 also encodes and decodes according to the Tagged Image File Format (TIFF) or the like, which is an image format generally used as a file attachable to electronic mail.

The MODEM 19 is connected to the bus 23, and includes functions as a faxmodem capable of carrying out facsimile communication. The MODEM 19 is also connected to the NCU 20, which is also connected to the bus 23. The NCU 20 is hardware for closing and releasing an analog communication line. The NCU 20 connects the MODEM 19 to the PSTN 5 according to necessity. The LAN I/F 21 is connected to the LAN 6. The LAN I/F 21 receives a signal from the Internet network 7, and transmits a signal and/or data to the LAN 6. The LAN I/F 21 executes an interface processing such as a signal conversion and a protocol conversion.

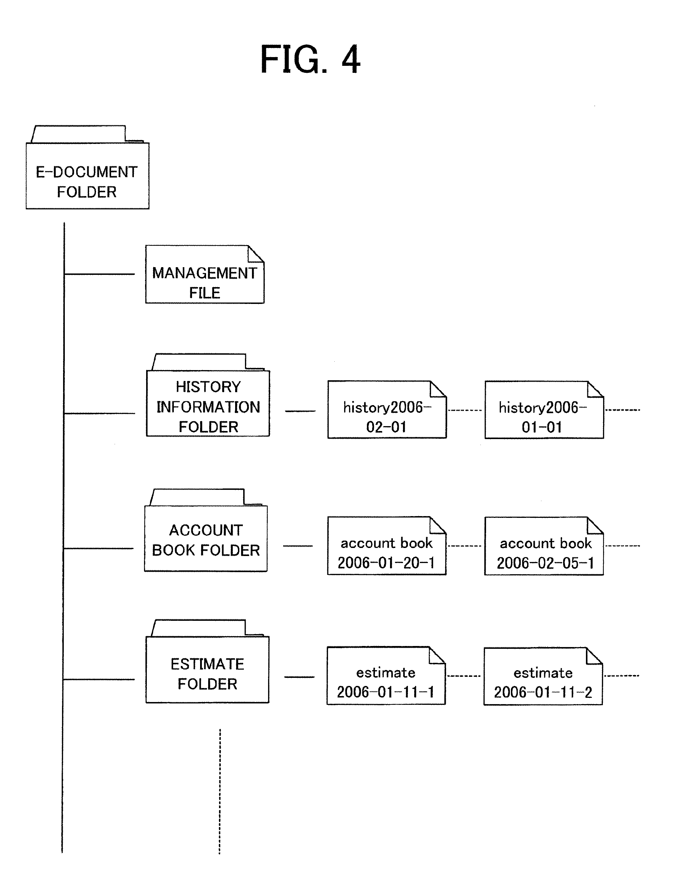

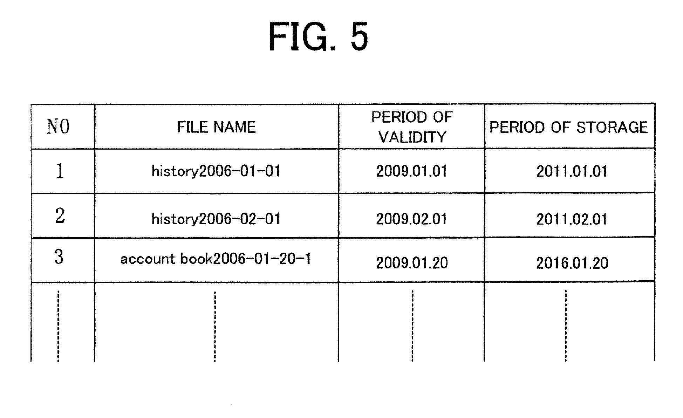

The e-document storage unit 22 is a storage unit which stores e-documents per document type. As shown in Fig. 4, the e-document storage unit 22 includes a management file of e-documents, a history information folder, and folders for each of the following documents: account book, estimate, memorandum, and/or purchase order, etc. Each document folder stores a scanned document assigned with a file name and a timestamp. Further, the file name of the document folder includes a character string capable of identifying a document name, a date, and a consecutive number. The history information folder stores the history information data, which has been encoded into the same format as the scanned data, and the timestamp under a file name including "history" and data, for example. As shown in Fig. 5, for the e-documents, the management file stores a file name, a period of validity of the timestamp, and a period of storage of the data.

In the above-described digital MFP 1, when carrying out facsimile transmission, the user sets a transmission original at the scanning unit 15, and presses the fax switching key 40 of the display and operation unit 14. Then, a transmission destination entry section is displayed on the LCD display unit 31. The user enters a dial number of a transmission destination by operating the ten-key numeric pad 32, or selects a transmission destination by operating the one-touch dial key 36. Then, by pressing the start key 33, image data of the original can be transmitted by facsimile.

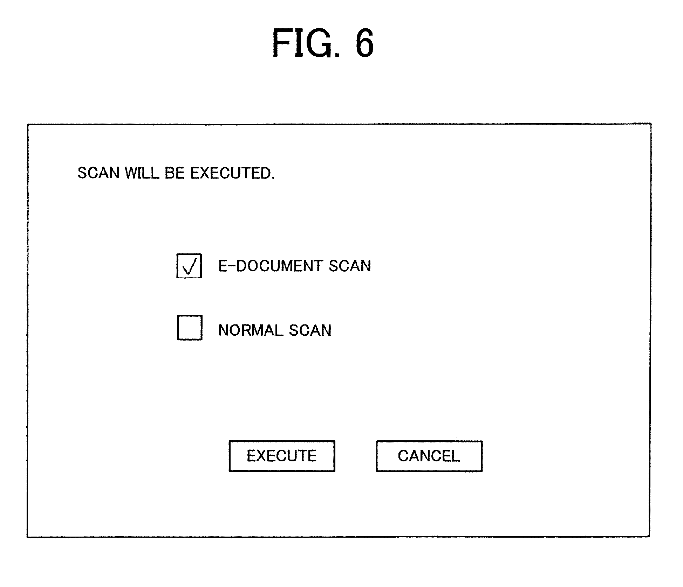

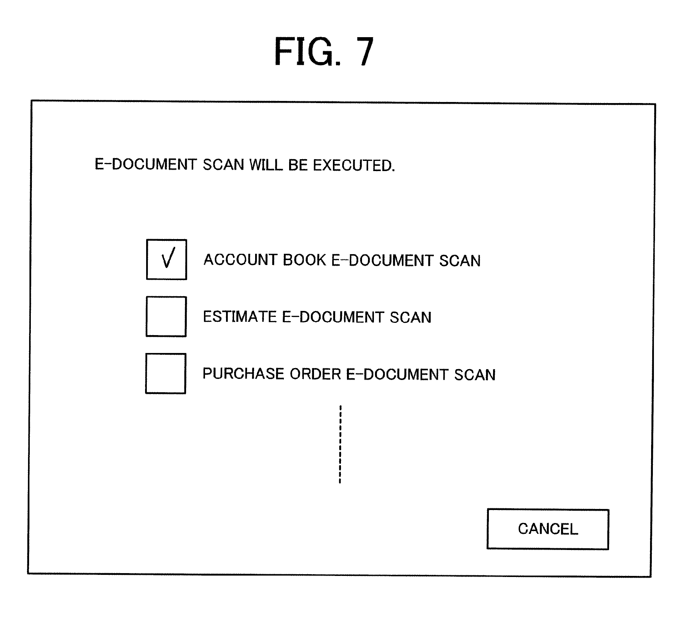

When converting a document into an e-document, the user presses the scanner switching key 42 of the display and operation unit 14, and a scan execution screen shown in Fig. 6 is displayed on the LCD display unit 31. When the user selects the e-document scan in this screen and presses the "EXECUTE" button, the LCD display unit 31 displays an e-document scan execution screen shown in Fig. 7. The e-document scan execution screen displays a selection screen for selecting a document type to be executed with e-document scan, e.g. an account book e-document scan, an estimate e-document scan, and a purchase order e-document scan. When either one of the e-document scans is pressed and selected, by pressing the start key 33, the document can be converted into an e-document.

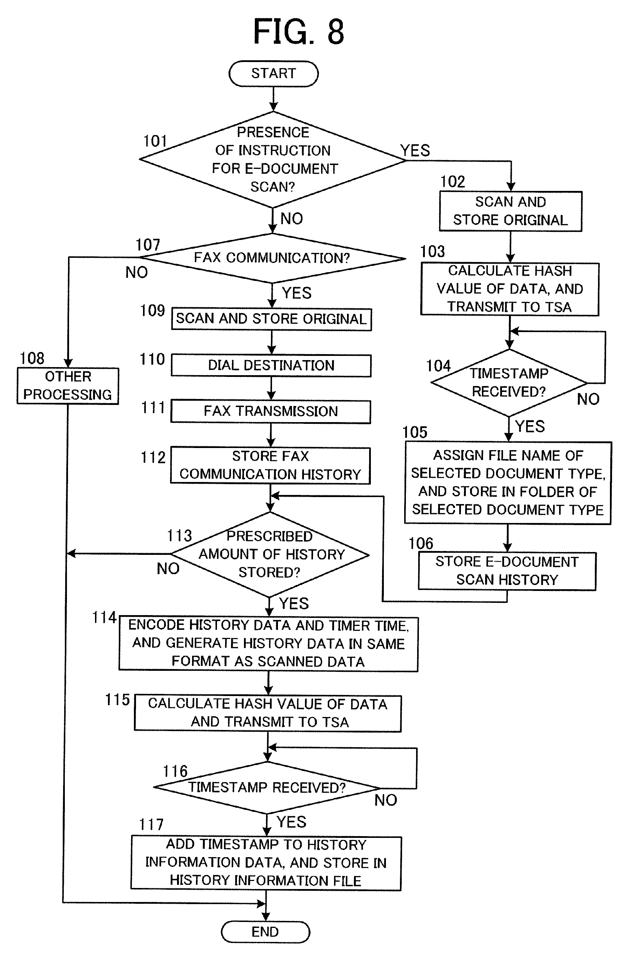

Next, with reference to the flowchart of Fig. 8, a description will be made of an operation carried out by the CPU 11 when the start key 33 is pressed. When the start key 33 of the display and operation unit 14 is pressed, the CPU 11 starts a program shown in the flowchart of Fig. 8. First, the CPU 11 determines as to a presence or an absence of an instruction for e-document scan (step 101). When the user has selected the e-document scan at the scan execution screen of Fig. 6, image data of an original set at the scanning unit 15 is scanned by the scanning unit 15, compressed by the CODEC 18, and stored in the image memory 16 (step 102).

Next, the CPU 11 calculates a hash value of the data stored in the image memory 16, and transmits the calculated hash value data to the TSA 8 via the LAN interface 21, the LAN 6, and the Internet network 7 (step 103). Then, the CPU 11 determines as to whether or not a timestamp has been received from the TSA 8 (step 104). When receiving a timestamp from the TSA 8, the CPU 11 creates a file name including a character string capable of identifying a document name, date, and a consecutive number. Then, the CPU 11 stores the scanned data and the timestamp under the created file name in a folder of the selected document type, and stores management data in the management file (step 105). The CPU 11 stores e-document scan history in the RAM 13 (step 106).

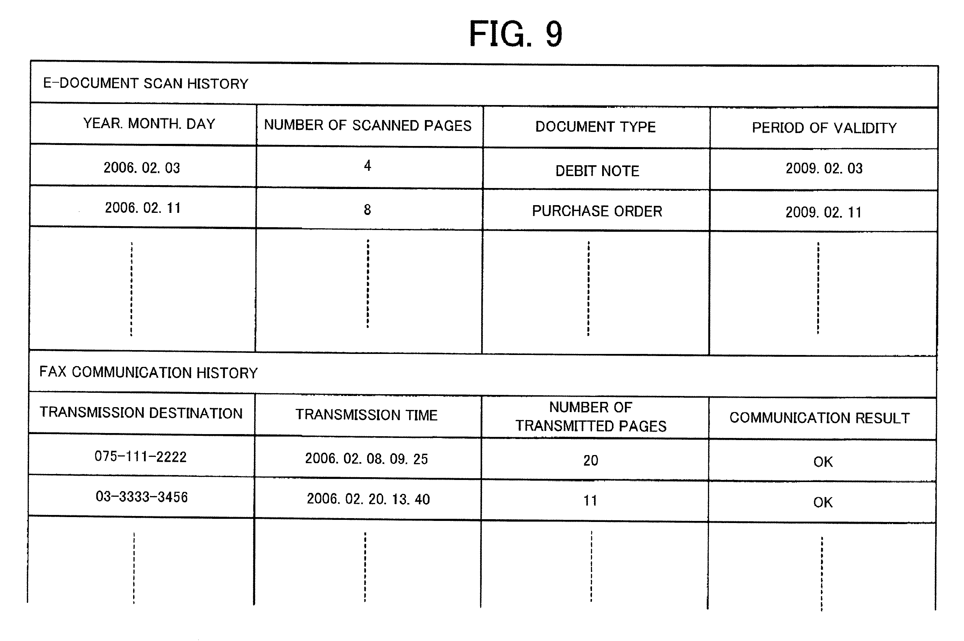

For example, when the user has selected the account book e-document scan in the e-document scan execution screen of Fig. 7, an account book file name is created by "account book", "date" and "consecutive number". The scanned data and the timestamp are stored under the created file name in the account book folder of the e-document storage unit 22. As shown in Fig. 5, the file name, the period of validity of the timestamp, and the period of storage of the e-document are stored in the management file. As shown in Fig. 9, in an e-document scan history section, the RAM 13 stores date (year/month/day) when the e-document has been created, a number of scanned pages, a document type, and a period of validity. Further, a term of storage of a document can be designated for each document type, for example, ten years for account books, or five years for purchase orders. Therefore, the period of storage can be automatically decided according to a creation date of the e-document and the term of storage for the type of such e-document.

Meanwhile, when the CPU 11 determines at step 101 that an instruction for e-document scan has not been made, the CPU 11 determines as to whether or not the user has instructed facsimile transmission (step 107). When the CPU 11 determines that the user has not instructed the facsimile transmission, the CPU 11 executes other processing such as copying (step 108). When the CPU 11 determines at step 107 that the user has instructed the facsimile transmission, image data of an original is scanned by the scanning unit 15, compressed by the CODEC 18, and stored in the image memory 16 (step 109).

Next, the image data stored in the image memory 16 is converted into G3 data by the CODEC 18. Then, the CPU 11 controls the MODEM 19 and the NCU 20 to transmit a dial number of the designated destination to the PSTN 5 (step 110). When communication is established, after the MODEM 19 modulates the G3 data, the G3 data is transmitted by facsimile from the NCU 20 via the PSTN 5 to the destination (step 111). When the facsimile communication is completed, the CPU 11 stores facsimile communication history in the RAM 13 (step 112). That is, as the communication history, the CPU 11 stores a transmission destination of the facsimile, transmission time, a number of transmitted pages, and a communication result or the like in the fax communication history section of the RAM 13 as shown in Fig. 9.

When the e-document scan history or the facsimile communication history is stored at step 106 or step 112, the CPU 11 determines as to a prescribed amount of history (for example, 100 history), which is stored in the RAM 13 and has not been converted into an e-document, has been stored (step 113). When the history that has not been converted into an e-document has not reached the prescribed amount, the program ends.

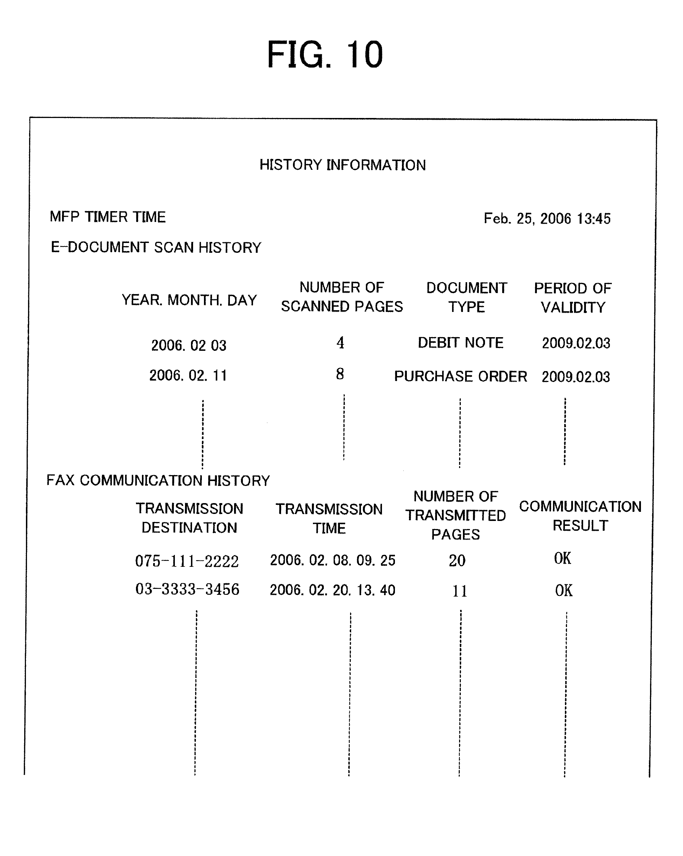

Meanwhile, when a determination is made at step 113 that the history that has not been converted into an e-document has reached the prescribed amount, the CPU 11 adds a timer time at that point of time to the history data, which is stored in the RAM 13 and has not been converted into an e-document, and encodes the history data to generate history data that is in the same format as the scanned data as shown in Fig. 10 (step 114). Then, in the same manner as described above, the CPU 11 calculates a hash value of the generated data, and transmits the hash value data to the TSA 8 via the LAN interface 21, the LAN 6, and the Internet network (step 115).

After transmitting the hash value data to the TSA 8, the CPU 11 determines as to whether or not a timestamp has been received from the TSA 8 (step 116). When receiving a timestamp from the TSA 8, the CPU 11 creates a file name by "history" and "date", and stores the history information data and the timestamp under the created file name in a history folder of the e-document storage unit 22. The file name, the period of validity, and the period of storage are stored in the management file.

As described above, each time when history that has not been converted into an e-document reaches 100, a timestamp is assigned to data of the e-document history generation history or the facsimile transmission history and stored in the e-document storage unit 22. Therefore, it is possible to verify the time when the history information has been fixed, and to verify that the history information has not been altered. At this time, clock data of the digital MFP is added to the history data, and a time stamp is assigned to the history data. Therefore, even when the clock data of the digital MFP was inaccurate, based on the time of the timestamp and the clock data of the digital MFP when the timestamp has been assigned, it is possible to know an error of the clock data of the digital MFP. Accordingly, it is possible to accurately know the time included in the history information, and to carry out a verification of an operation of a communication device based on the accurate time.

Further, in the above-described preferred embodiment, when history that has not been converted in an e-document reaches a prescribed amount, e-document generation history and/or facsimile transmission history are converted into e-documents. However, as another example, e-document generation history and facsimile transmission history may be converted into an e-document on the first day of every month. In the above-described preferred embodiment, a communication device with a time authentication requesting function is applied to a digital MFP having an e-document scanning function. However, the present invention is also applicable to a general communication device such as a facsimile machine.

In the above-described preferred embodiment, a user selected account book e-document scan, estimate e-document scan, or the like from a display screen of a display and operation unit. However, as another example, buttons for executing each of the e-document scans may be provided, and by operating the buttons, the user may instruct to execute the e-document scan of each document type. In the above-described preferred embodiment, a file name is created by a character string capable of identifying a document name, date, and a consecutive number, and an e-document is automatically stored in a document file according to a document type. However, the user may designate a storage location of an e-document, or manually enter a document name and assign such a document name.

While the present invention has been described with respect to preferred embodiments thereof, it will be apparent to those skilled in the art that the disclosed invention may be modified in numerous ways and may assume many embodiments other than those specifically set out and described above. Accordingly, the appended claims are intended to cover all modifications of the present invention that fall within the scope of the present invention.

## Claims

1. A communication device with a time authentication requesting function, the communication device comprising:
a communication means;
a time authenticated document storing means for storing a time authenticated document; and
a control means for assigning a timestamp to a document and storing the document assigned with the timestamp in the time authenticated document storing means,
wherein the communication device further comprises a history information storing means for storing history information, and
the control means assigns a timestamp to history information data stored in the history information storing means, and stores the history information data assigned with the timestamp in the time authenticated document storing means.

2. A communication device according to claim 1, wherein the history information is one of a time authenticated document generation history and a communication history.

3. A communication device according to claim 1, wherein the history information is a time authenticated document generation history and a communication history.

4. A communication device according to claim 1, wherein, when assigning the timestamp to the history information data, the control means adds clock data of a communication device to the history information data.
